# EUROPEAN PATENT APPLICATION

(11) **EP 3 745 343 A1**
(43) Date of publication of application: **02.12.2020**
(21) Application number: 19743671.0
(22) Date of filing: 25.01.2019
(51) Int. Cl.: G06Q 40/04, G06Q 20/06, G06Q 20/38, G06Q 20/36

(54) **CURRENCY EXCHANGE AND FOREIGN EXCHANGE TRANSACTION METHOD OF USING BLOCKCHAIN-BASED DIGITAL ASSETS INCLUDING CRYPTOCURRENCY AS INTERMEDIARY**

(30) Priority: 26.01.2018 KR 20180010206; 11.04.2018 KR 20180041938
(71) Applicant: Lee, Je-Kwon, Bucheon-si, Gyeonggi-do 14533 (KR)
(72) Inventor: Lee, Je-Kwon, Bucheon-si, Gyeonggi-do 14533 (KR)
(74) Representative: Savi, Massimiliano
(86) International application number: PCT/KR2019/001099
(87) International publication number: WO 2019/147069

(57) **Abstract**

The present invention relates to a currency exchange and foreign exchange trading method through a block chain-based digital asset including cryptocurrency as a medium. More particularly, the present invention provides a method of easily and quickly executing exchange transaction without economic loss, which excludes transfer of the block chain-based digital asset between exchanges with delayed standby time, instead, uses: an environment wherein the digital asset is traded with cross-currency in a single exchange; an environment wherein the digital asset is shared by a contract or the like between a plurality of exchanges dealing with different currencies from one another; or an environment wherein transaction information of the above digital asset is shared between the exchanges even though the digital asset is not directly shared, so as to establish a foreign exchange market using the digital asset as a medium in a digital asset exchange based on the block chain technology, whereby the consumer directly receives application of buy-offer spread in the market.

## Description

### [Field of Invention]

The present invention relates to a method for foreign exchange trading through a block chain-based digital asset including a cryptographic currency as a medium, and more particularly, to a method of quickly and easily exchanging a type of currency into another type of currency through a medium, that is, block chain-based digital assets, which uses a feature of the block chain-based digital assets including cryptographic currency wherein digital assets are traded in different denominations in the same exchange, or the digital assets or related trading information are shared between exchanges.

### [Background of Invention]

As is well known, conventional currency exchange services are to exchange one currency into another currency in a bank with paying a corresponding spread or exchange fees. The corresponding fees or spread becomes a profit of the bank due to the exchange. The spread applied herein has a significant difference from a basic exchange rate applied to the bank in the foreign exchange market, hence causing considerable economic loss of a currency exchange consumer in the exchange transaction.

On the other hand, a block chain-based digital asset means an asset wherein, for example, a trading record thereof was encrypted and registered on a block chain network, thus being very difficult to forge or alter the same. A typical example of such asset may be cryptographic currency ("cryptocurrency"). Such cryptocurrency is intangible transaction record or a result thereof that mediates transaction using a password based on block chain technology in order to safely execute the transaction, which is a kind of digital currency or virtual money. Recently, there are about 2,100 cryptographic currencies traded in approximately 16,200 cryptographic exchanges around the world.

Although the cryptocurrency is expected as a unified currency unit to contribute to movement of capital between countries, remittance of the cryptocurrency necessarily involves encryption by a digger of the corresponding currency and thus entails inconvenience that the remittance takes about 10 minutes in short and up to about several days. Further, since there is no theoretical valuation standard in terms of features of the cryptocurrency, fluctuation of prices traded in the market is very high and the cryptocurrency may be exposed to a risk of value fluctuation during delayed remittance. Accordingly, it is difficult to realize capital movement between countries using the cryptocurrency.

In order to solve this problem, short selling as a credit transaction for cryptocurrency is used or, otherwise, derivatives are combined to avoid a risk of price fluctuation. However, in case of dealing with credit or derivatives, a deposit is required and thus additional capital is needed in addition to the amount of remittance. Consequently, No significant advantage is achieved, as compared to remittance through the existing bank.

As described above, the prior art has a problem in that economic loss may occur due to excessive commission or spread, or currency exchange using the cryptocurrency may also be exposed to unnecessary price fluctuation risks, thereby urgently requiring improvement thereof.

### [Summary of Invention]

### [Technical Problem to be Solved]

The present invention has been completed in consideration of the aforementioned situations of the prior arts, and an object of the present invention is to provide a method for quickly and easily exchanging currency without economic loss, which excludes transfer of the block chain-based digital asset between exchanges with delayed standby time, instead, uses: an environment wherein the digital asset is traded with cross-currency in a single exchange; an environment wherein the digital asset is shared by a contract or the like between a plurality of exchanges dealing with different currencies from one another; or an environment wherein trading information of the above digital asset is shared between the exchanges even though the digital asset is not directly shared, so as to establish a foreign exchange market using the digital asset as a medium in a digital asset exchange based on the block chain technology, whereby the consumer directly receives application of buy-offer spread in the market.

### [Technical Solution]

In order to achieve the above objects, according to a preferred embodiment of the present invention, there is provided a foreign exchange trading method through a block chain-based digital asset including cryptocurrency as a medium. More particularly, in any of the cases where the block chain-based digital asset including one cryptocurrency is traded in two or more currencies in a single exchange, this digital asset is shared through a contract or the like between the exchanges dealing with different currencies from each other or trading information of the above digital asset is shared between the exchanges dealing with different currencies from each other, the foreign exchange trading method may include: (a) receiving information on buy-offer price (or bid) and standby order under trading in reference to currency A from a block chain-based digital asset trading server in reference to currency A by a foreign exchange trading intermediary server 6 with respect to the above block chain-based digital asset; (b) receiving information on buy-offer bid and standby order under trading in reference to currency B from a block chain-based digital trading server in reference to currency B by the foreign exchange trading intermediary server 6 with respect to the above block chain-based digital asset; (c) estimating a foreign currency buying price and standby order in reference to currency A or a foreign currency offering price and standby order in reference to currency B by the foreign exchange trading intermediary server 6, in consideration of the buying price and standby order of the block chain-based digital asset in reference to currency A and the offering price and standby order of the block chain-based digital asset in reference to currency B; and (d) estimating a foreign currency offering price and standby order in reference to currency A or a foreign currency buying price and standby order in reference to currency B by the foreign exchange trading intermediary server 6, in consideration of the offering price and standby order of the block chain-based digital asset in reference to currency A and the buying price and standby order of the block chain-based digital asset in reference to currency B.

Preferably, the present invention provides a foreign exchange trading method through a block chain-based digital asset including cryptocurrency as a medium, characterized in that: steps (a) and (b) are reversed or conducted at the same time; and steps (c) and (d) are reversed or conducted at the same time.

Preferably, the present invention provides a foreign exchange trading method through a block chain-based digital asset including cryptocurrency as a medium, characterized in that the foreign exchange trading intermediary server 6 may convert and display results calculated in steps (c) and (d) in reference to currency A or currency B, respectively, according to selection from an exchange consumer terminal 2.

Preferably, the present invention provides a foreign exchange trading method through a block chain-based digital asset including cryptocurrency as a medium, characterized in that the foreign exchange trading intermediary server 6 may process and publish the best foreign currency buy-offer bid, an average value thereof or reciprocals thereof as current prices, without considering standby order.

Preferably, the present invention provides a foreign exchange trading method through a block chain-based digital asset including cryptocurrency as a medium, characterized in that the foreign exchange trading intermediary server 6 may also display publicly assessed price ("declared price") of the foreign exchange market.

Preferably, the present invention provides a foreign exchange trading method through a block chain-based digital asset including cryptocurrency as a medium, characterized in that the foreign exchange trading intermediary server 6 may receive a request of a currency exchange consumer and automatically treat the trading when the current exchangeable rate becomes greater than (or exceeds) or less than (or under) the request of the foreign exchange consumer.

Meanwhile, in any of the cases where the block chain-based digital asset including one cryptocurrency is traded in two or more currencies in a single exchange, this digital asset is shared by a contract or the like between the exchanges dealing with different currencies from each other or trading information of the above digital asset is shared between the exchanges dealing with different currencies from each other, there is provided a foreign exchange trading method through a block chain-based digital asset including cryptocurrency as a medium, which includes: (a) receiving a request of a currency exchange consumer to exchange a predetermined amount from currency A to currency B by a foreign exchange trading intermediary server 6; (b) buying a digital asset in currency A of all or a portion of the predetermined amount from a single or multiple block chain-based digital asset sellers on standby; (c) selling (offering) the bought block chain-based digital asset in currency B to a single or multiple block chain-based digital asset buyers on standby; and (d) paying the offered currency B to the currency exchange consumer.

Preferably, the present invention provides a foreign exchange trading method through a block chain-based digital asset including cryptocurrency, characterized in that clearance is performed in step (b) by short sale after step (c) .

Meanwhile, in any of the cases where the block chain-based digital asset including one cryptocurrency is traded in two or more currencies in a single exchange, this digital asset is shared by a contract or the like between the exchanges dealing with different currencies from each other or trading information of the above digital asset is shared between the exchanges dealing with different currencies from each other, there is provided a foreign exchange trading method through a block chain-based digital asset including cryptocurrency as a medium, which includes: (a) receiving a request of a currency exchange consumer to exchange a predetermined amount from currency A to currency B by a foreign exchange trading intermediary server 6; (b) paying all or a portion of the predetermined amount in reference to currency A to a single or multiple block chain-based digital asset sellers on standby, and transferring all or a portion of the digital asset in reference to currency B to a single or multiple block chain-based digital asset buyers on standby; and (c) paying all or a portion of standby fund of the single or multiple block chain-based digital asset buyers on standby in reference to currency B to the currency exchange consumer.

### [Effect of Invention]

According to the present invention, the foreign exchange trading method through a block chain-based digital asset including cryptocurrency as a medium has advantages in that: a foreign exchange consumer may directly execute foreign exchange transaction using a medium, that is, a block chain-based digital asset in the market so as to minimize a buy-offer spread of the foreign exchange consumer; the trading is terminated in a single exchange or the block chain-based digital asset is shared by a contract between exchanges ("inter-exchange contract") so as to omit any transfer procedure, thereby causing no risk of price fluctuation of the digital asset during delayed transfer. Further, the risk of price fluctuation may also be avoided by sharing information on exchange transaction between exchanges so as to conduct post-clearance without sharing the block chain-based digital asset.

### [Brief Description of Drawings]

FIG. 1 is a schematic diagram illustrating a configuration of a currency exchange and foreign exchange ("foreign exchange") trading system through a block chain-based digital asset including cryptocurrency as a medium according to the present invention.
FIG. 2 illustrates an example of a structure in which two currencies are traded for a block chain-based digital asset including one cryptocurrency.
FIG. 3 is a block diagram illustrating an example of currency exchange transaction through a block chain-based digital asset including cryptocurrency as a medium.
FIG. 4 illustrates buy-offer bid and standby order which are traded in two currencies for a block chain-based digital asset including one crytocurrency.
FIG. 5 is a conceptual diagram illustrating a foreign exchange market using the buy-offer bid and standby order in two currencies.
FIG. 6 illustrates an example of a flowchart in regard to provision of the conceptual diagram shown in FIG. 5.
FIG. 7 illustrates a foreign exchange market based on results calculated in FIG. 6.

### [Best Mode for Carrying Out Invention]

Hereinafter, the present invention will be described in detail with reference to the drawings.

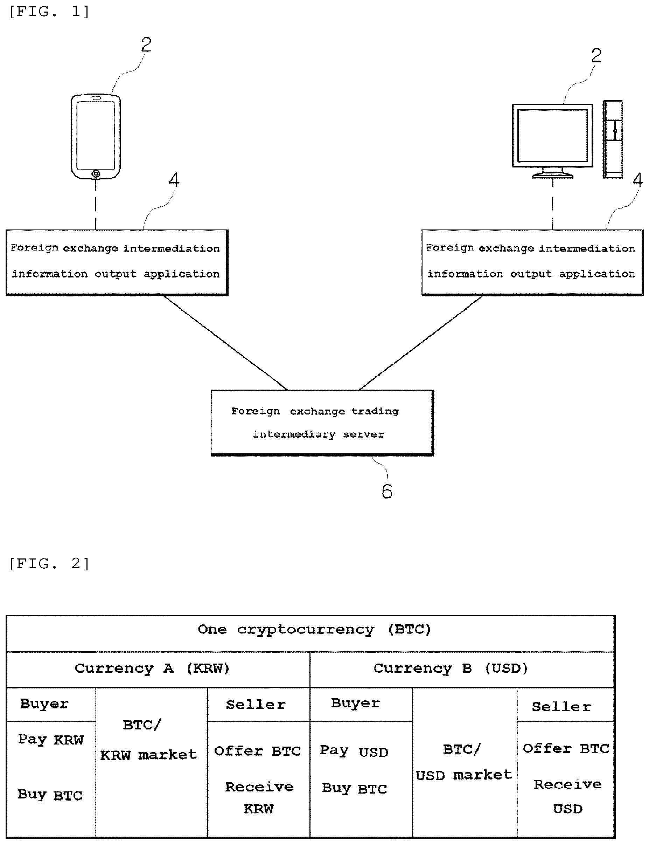

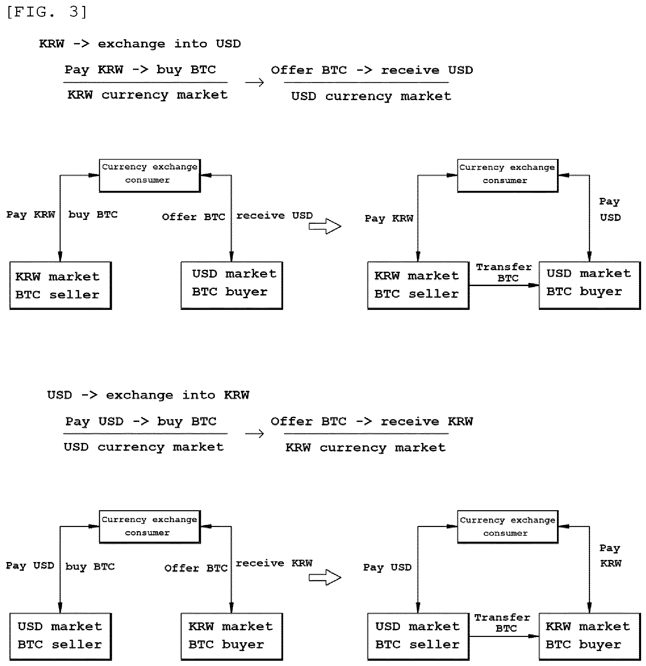

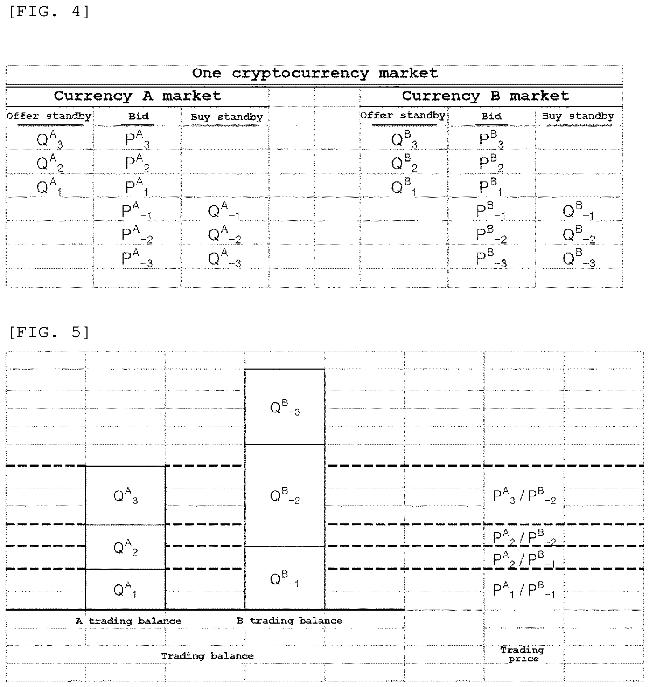

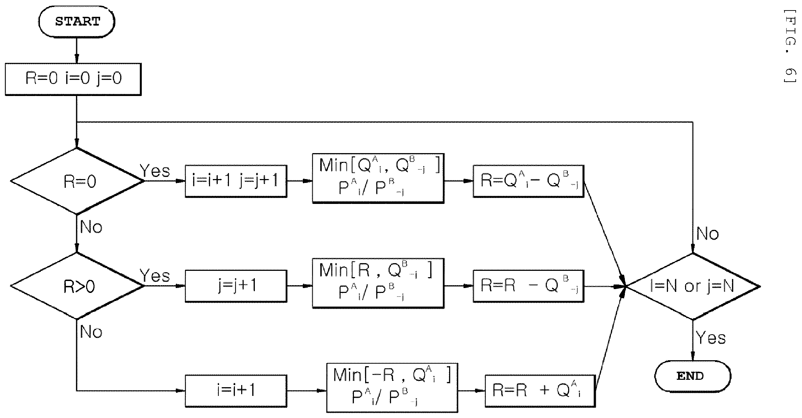

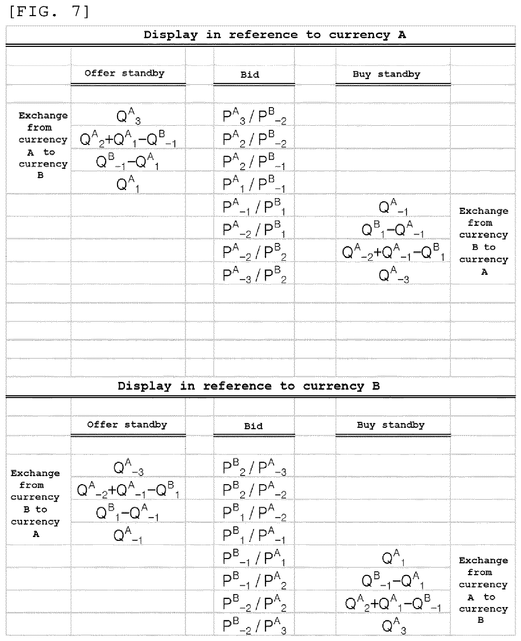

FIG. 1 is a schematic diagram illustrating a configuration of a foreign exchange trading system through a block chain-based digital asset including cryptocurrency as a medium according to the present invention; FIG. 2 illustrates an example of a structure in which two currencies are traded for a block chain-based digital asset including one cryptocurrency; FIG. 3 is a block diagram illustrating an example of currency exchange transaction through a block chain-based digital asset including cryptocurrency as a medium; FIG. 4 illustrates buy-offer bid and standby order which are traded in two currencies for block chain-based digital asset including one crytocurrency; FIG. 5 is a conceptual diagram illustrating a foreign exchange market using the buy-offer bid and standby order in two currencies; FIG. 6 illustrates an example of a flowchart in regard to provision of the conceptual diagram shown in FIG. 5; and FIG. 7 illustrates a foreign exchange market based on results calculated in FIG. 6.

Referring to these drawings, the foreign exchange trading method through a block chain-based digital asset including cryptocurrency as a medium according to an embodiment of the present invention may allow a foreign exchange consumer to directly carry out foreign exchange transaction using a medium, that is, the block chain-based digital asset, which includes cryptocurrency, thereby minimizing buy-offer spread of the foreign exchange consumer. Further, since the trading is terminated in a single exchange or the block chain-based digital asset including cryptocurrency is shared by an inter-exchange contract or the like, any transfer procedure or block chain-based digital asset is not required and thus there is no risk of price fluctuation during delayed transfer. Still further, the risk of price fluctuation may also be avoided by sharing exchange trading information between exchanges followed by post-clearance, thereby accomplishing effective and efficient foreign exchange transaction.

Hereinafter, with regard to the block chain-based digital asset, a case of dealing with one cryptocurrency in two or more currencies in a single exchange will be firstly described together with, for example, the most representative cryptocurrency.

More specifically, as shown in FIG. 1, the foreign exchange trading intermediary server 6 ("intermediary server") may collect buy-offer bid and standby order information in each market from a transaction server of a trading market, wherein one cryptocurrency is traded in two or more currencies, followed by processing data, and then, may provide information to an exchange consumer terminal 2 through foreign exchange intermediation information output **application 4.** Further, the intermediary server 6 may receive an exchange request of the currency exchange consumer and conduct exchange transaction. The intermediary server 6 may be a single server or may be divided into a plurality of servers for efficient transaction and management.

In one embodiment, a situation of dealing with one cryptocurrency in two different currencies is shown in FIG. 2. Indeed, cryptocurrency exchanges in Korea are dealing with only the "Won" currency market as the legal currency. However, some of overseas cryptocurrency exchanges such as Bitfinex, GDAX, Kraken, etc. deal with cryptographic currencies based on a number of legal currencies. As such, if multiple legal currencies are activated for such a single cryptocurrency, foreign exchange transaction using cryptocurrency as a medium may be configured on the ground of the activation.

In other words, as shown in FIG. 2, when transaction of one cryptocurrency, e.g., BTC, is simultaneously made in two currencies, for example, the KRW and the USD in a single exchange, BTC may be bought with the KRW and then immediately sold (or offered) with the USD in the same manner as in FIG 3, thereby achieving effects of exchanging the KRW into the USD. This process is executed in a single exchange and does not need to send the cryptocurrency to others, for example, to another exchange, whereby there is no standby time for remittance till offering after buying. Accordingly, BTC may be bought and then immediately offered to thus cause no risk of price fluctuation, whereby conventional techniques such as short selling or combination of derivatives are not required.

Meanwhile, since BTS is bought and then immediately offered, these two transactions may be integrated into one transaction.

Preferably, when the KRW of a currency exchange consumer is paid to a BTC seller in the KRW market, the BTC is transferred to a buyer in the USD market, and then, the corresponding USD is paid to the currency exchange consumer, two transactions of buy-offer may be integrated into a single triangular transaction.

Using the above method may save trading fees (or commissions) occurring in each BTC transaction. In other words, since two transactions are shortened into a single transaction, the trading fee can be decreased to half the existing one. Further, in a country where transaction tax or profit tax is levied on transaction of cryptographic currency, the taxpayer may not judge to levy unnecessary tax on the currency exchange consumer since the currency exchange consumer did not substantially deal with cryptocurrency.

Alternatively, according to a method opposite to the above embodiment, the USD may be exchanged into the KRW. That is, BTC is bought in the USD and then immediately offered in the KRW, thereby achieving the same effects as the exchange of the USD into the KRW. Of course, these transactions may be integrated into a single triangular transaction, which is same as described above.

As such, under a trading environment that one cryptocurrency is traded in two or more currencies, the currency exchange consumer may directly exchange using cryptocurrency as a medium and the expense paid therefor are only the commission to be paid to the exchange. Indeed, since the spread of the market is directly applied, the exchange transaction can be made at a minimum cost.

However, since the purpose of the currency exchange consumer is only a currency exchange and transaction of the cryptocurrency is not included in the purpose, as shown in FIG. 4, foreign exchange transaction is not easy using the buy-offer bid and standby order in regard to the cryptocurrency. If a person directly carries out a process of buying the cryptocurrency and then selling the same, a risk of price fluctuation due to error or mistake may be caused. Accordingly, the present invention provides a buying-offering method of: processing the data in FIG. 3 to be suitable for a currency exchange consumer so that the data is represented like as a foreign exchange market and makes it easier for the currency exchange consumer; and, if there is a request of the consumer, automatically buying a cryptocurrency and then immediately offering the same to eliminate a risk of price fluctuation.

More specifically, the cryptocurrency market in regard to currencies A and B is shown in FIG. 4. Herein, a currency exchange consumer who wishes to exchange currency A into currency B should buy a cryptocurrency in a currency A market and then offer the same in a currency B market. In order to buy the cryptocurrency in the currency A market, the cryptocurrency should be bought at a price of P^{A}₁ within a quantity of Q^{A}₁ from a counter offer party in reference to currency A. If the purposed exchange amount exceeds a multiplication of P^{A}₁ and Q^{A}₁ (that is, P^{A}₁ x Q^{A}₁), which is a total amount of the lowest offer-standby order, the cryptocurrency should be bought at another price of P^{A}₂ one-level higher than P^{A}₁. If the purposed exchange amount exceeds a sum of (P^{A}₁ x Q^{A}₁) and (P^{A}₂ x Q^{A}₂), the cryptocurrency should be bought at a price of P^{A}₃ one-level higher than P^{A}₂ according to the same principle.

Since then, the cryptocurrency bought in this manner should be offered at a price of P^{B}-₁. If a quantity of the cryptocurrency to be offered exceeds the highest buy standby order of Q^{B}₋₁, the cryptocurrency should be offered at another price of P^{B}₋₂ one-level lower than P^{B}₋₁.

According to the above trading method, in one embodiment, a structure of the buy-offer standby order and the buy-offer bid in the foreign currency market using the cryptocurrency for exchanging currency A into currency B as a medium is shown in FIG. 5. More specifically, the exchange can be conducted at a price of P^{A}₁/P^{B}₋₁ for Q^{A}₁, which is a smaller value among Q^{A}₁ and Q^{B}₋₁, while exchanging at a price of P^{A}₂/P^{B}₋₁ for (Q^{B}₋₁- Q^{A}1). Similarly, for (Q^{A}₂ + Q^{A}₁ - Q^{B}₋₁), the exchange can be conducted at a price of P^{A}₂/P^{B}₋₂ while exchanging at a price of P^{A}₃/P^{B}₋₂ for Q^{A}₃.

As described in the above embodiment, with respect to the quantity and corresponding price for each section, a calculation structure may depend on transaction scales and transaction standby orders in current A market and current B market. Further, in consideration of the above grounds, one example of the calculation structure is shown in FIG. 6. The foreign exchange trading intermediary server 6 may treat such operation and then output the treated result through foreign exchange intermediation information output application 4 to an exchange consumer terminal 2.

More specifically, the foreign exchange trading intermediary server 6 sets R = 0, i = 0 and j = 0 as initial values. Thereafter, a trading procedure is altered along R value and is described below.

If R = 0, new values are set such as i = i + 1 and j = j + 1, respectively. Further, Min [Q^{A}ᵢ, Q^{B}₋ⱼ] is output as the standby order and P^{A}ᵢ/P^{B}₋ⱼ is output as the trading price, followed by re-setting **R = Q^{A}ᵢ** - Q^{B}₋ⱼ.

If R > 0, a new value of j = j + 1 is set, Min [R, Q^{B}_{- j}] is output as the standby order and P^{A}ᵢ/P^{B}₋ⱼ is output as the trading price, followed by re-setting R = R - Q^{B}₋ⱼ.

If R < 0, a new value of i = i + 1 is set, Min [R, Q^{B}_{- j}] is output as the standby order and P^{A}ᵢ/P^{B}₋ⱼ is output as the trading price, followed by re-setting R = R + Q^{A}ᵢ.

After any one of the above three steps is completed, when i or j reaches the maximum value of N, the foreign exchange trading intermediary server 6 terminates the output and the operation.

Consequently, it is possible to display a foreign exchange market using the cryptocurrency applicable to a currency exchange consumer who wishes exchange currency A into currency B, as a medium.

Similarly, a currency exchange consumer who wishes exchange currency B into currency A may also approach in the same manner. First, when the cryptocurrency is bought in currency B and then immediately offered in currency A, effects of exchanging currency B into currency A may be obtained. Therefore, if the process of the present invention as described above is conducted with reversing currency A and currency B to each other, it is possible to display a foreign exchange market using the cryptocurrency applicable to a currency exchange consumer who wishes exchange currency B into currency A, as a medium.

Both results of the currency exchange processes from currency A to currency B and from currency B to currency A, respectively, may be represented as shown in FIG. 7. The illustration of FIG. 7 is a calculated result based on the illustration shown in FIG. 5. As well known in the art, this result may vary depending on the buy-offer standby order value. Further, although symmetrical values of Q^{A}ᵢ = Q^{A}₋ᵢ and Q^{B}ⱼ = Q^{B}_{- j} have been assumed for convenience of calculation, this assumption could not be realized in the real market. Further, as in the existing foreign exchange market, the price may be represented in reference to both of currency A and currency B, therefore, both P^{A}/P^{B} and P^{B}/P^{A} may be represented. Further, since Q value as a trading balance is a remaining balance in reference to cryptocurrency, this value is multiplied by a proper multiplier applied to a corresponding section (currency A or currency B). As a result, a foreign exchange trading method using cryptocurrency as a medium is finally completed.

On the other hand, with respect to the foreign exchange trading method using the cryptocurrency as a medium according to an embodiment of the present invention, the commission fee of the exchange is not reflected and the currency exchange consumer may not directly receive the above market information. However, the cryptocurrency exchange may be under differential application of commission fees on the basis of investment amounts of cryptocurrency investors. Therefore, the price and trading balance are not uniformly adjustable and thus not be reflected. Further, since the conventional stock market or foreign exchange market displays the trading bid and standby order without reflection of the commission, the present invention has also followed the custom. If a uniform commission is applied, the commission may be reflected and represented on corresponding data. If a specific commission is applicable to each currency exchange consumer, different information with reflection of the commission may be provided to the currency exchange consumers.

On the other hand, with respect to the foreign exchange transaction using a cryptocurrency as a medium without considering the trading balance, the current price may be represented by P^{A}₁/P^{B}₋₁ and P^{A}₋₁/P^{B}₁ in reference to currency A. Therefore, the foreign exchange trading intermediary server 6 may display the corresponding data or an average value thereof at the current price. Further, if another foreign exchange market is established using another cryptocurrency by the above process, the current prices of both foreign exchange markets by two different cryptocurrencies are compared and represented, whereby the foreign exchange consumer may be provided with information on which one is more advantageous. In addition, a price publicly quoted in real time in the real foreign exchange market may also be displayed so as to support decision of a foreign exchange consumer. Of course, for convenience of the currency exchange consumer, a reciprocal of the data may also be represented in reference to currency B.

Since the above process of the present invention is not to deal with foreign currency itself, which is different from the conventional foreign exchange market, a difference in prices per the trading balance (Tick Value) is not determined. Since the foreign currency itself is not traded, buy-offer standby order on the foreign exchange transaction itself cannot be executed. Instead, the foreign exchange trading intermediary server 6 may receive a request of the currency exchange consumer and, when the currently exchangeable rate reaches above or below a request of the currency exchange consumer, automatically treat the trading.

Meanwhile, as is well known, according to a method of sharing one cryptocurrency between exchanges dealing with the cryptocurrency with different currencies, the same effects as the one exchange illustrated above may be achieved. For example, when one cryptocurrency exchange only dealing with currency B and another cryptocurrency exchange only dealing with currency A share the cryptocurrency in the same exchange electronic wallet by a contract or the like, any procedure of remittance for cryptocurrency is not needed and thus affords the same effects as a single exchange. Further, trading information may be shared even if both exchanges do not share the cryptocurrency, trading information is shared so as to afford substantially similar effects. For example, even if the cryptocurrency exchange only dealing with currency A and the cryptocurrency exchange only dealing with currency B do not share the cryptocurrency, both of these exchanges may share trading information relevant to currency exchange and, after the buy-offer trading of the cryptocurrency in each of the exchanges by a request of the currency exchange consumer, the cryptocurrencies are transferred to each other, followed by terminating the transaction, whereby a risk of price fluctuation may be avoided.

Sharing currency exchange-related trading information means that not only the request of the currency exchange consumer is shared, but also information on the buy-offer bid and standby order of cryptocurrency is shared to transfer foreign exchange market information based on cryptocurrency to potential currency exchange consumers. Of course, similar to the above reasons, even in an environment where a cryptocurrency is shared, information on buy-offer bid and standby order of the cryptocurrency should be shared in order to transfer the foreign exchange market information based on cryptocurrency to the potential currency exchange consumers.

Since the currency exchange consumer of the present invention can directly exchange a currency without going through a bank, the best spread may be applied. As the market participants are increasing, a balance price of cryptocurrency may be unified with the foreign exchange market, which in turn can contribute to overcoming imbalance wherein the cryptocurrency is traded at higher or lower prices in any specific country.

Further, even when price fluctuation of the cryptocurrency is rapid, a price of the cryptocurrency in reference to currency A and a price of the cryptocurrency in reference to currency B will move in a positive (+) correlation so as to further stabilize a trading price of foreign exchange using a cryptocurrency, which is applied to the currency exchange consumer, as a medium. This can contribute to price stabilization of the cryptocurrency.

As such, the above embodiments have used a cryptocurrency as an example of block chain-based digital assets. However, in order to implement the present invention, the cryptocurrency is not necessarily used as a medium. So far as an object based on block chain technology does not belong to a specific place and can be reliably present on a distributed network, the present invention will be implemented even though the object is not any encrypted currency. Accordingly, in addition to the existing cryptocurrencies such as bitcoin, Ethereum, etc., other block chain-based digital assets such as stock type token for securities having real value may also be utilized. Unlike the existing cryptocurrencies, such digital assets having real value may be calculated by any theoretical assessment standard and, since they have real value, potential investors who want to invest therein may also be much greater. Therefore, the digital asset having real value may be more actively traded than the existing cryptocurrency. Further, based on a great quantity of transactions, a foreign exchange market through more stable block chain-based digital asset as a medium may be deduced.

On the other hand, using features of the block chain-based digital asset, trading servers responsible for transaction of the digital assets may be integrated, which in turn enables integration of foreign exchange trading intermediary servers 6. Alternatively, in view of efficiency, legal currency management may be separately performed. That is, since the block chain-based digital asset is not an asset belonging to any one country or particular region but a virtual asset on a block chain network, a server responsible for transaction of digital assets can be located anywhere in the world. Therefore, using this server, transaction servers existing in a plurality of countries may be integrated into a single or a few number of transaction servers. For instance, if a transaction server for the block chain-based digital asset is installed in Korea and when US users as well as Korean users have dealings through this server, it is not necessary to further install other transaction servers in the United States. However, for transaction between a legal currency and the digital asset, the legal currency needs management. Therefore, if this transaction is managed respectively in Korea and the United States, transaction servers in both countries can be integrated. If a transaction server for block chain-based digital asset and a foreign exchange trading intermediary server 6 based on the transaction server are independent of legal currency management, a plurality of transaction servers located in respective countries may be integrated into a single or a few transaction servers. Further, the foreign exchange trading intermediary server 6 of the present invention can also be integrated into a single or a few number of servers, thereby maximizing efficiency.

The foreign exchange trading method through a block-chain-based digital asset including the cryptocurrency as a medium according to an embodiment of the present invention is not limited to the above embodiment but various alterations are possible without departing from a technical scope of the present invention.

### [Description of reference numerals]

2: Currency exchange consumer
4: Foreign exchange intermediation information output application
6: Foreign exchange trading intermediary server.

## Claims

1. A currency exchange and foreign exchange trading method through a block chain-based digital asset including cryptocurrency as a medium, comprising:
when the block chain-based digital asset including one cryptocurrency is traded in two or more currencies in a single exchange, this digital asset is shared by a contract or the like between the exchanges dealing with different currencies from each other or trading information of the above digital asset is shared between the exchanges dealing with different currencies from each other,
(a) receiving information on buy-offer bid and standby order under trading in reference to currency A from a block chain-based digital asset trading server in reference to currency A by a foreign exchange trading intermediary server 6 with respect to the above block chain-based digital asset;
(b) receiving information on buy-offer bid and standby order under trading in reference to currency B from a block chain-based digital transaction server in reference to currency B by the foreign exchange trading intermediary server 6 with respect to the above block chain-based digital asset;
(c) estimating a foreign currency buying price and standby order in reference to currency A or a foreign currency offering price and standby order in reference to currency B by the foreign exchange trading intermediary server 6, in consideration of the buying price and standby order of the block chain-based digital asset in reference to currency A and the offering price and standby order of the block chain-based digital asset in reference to currency B; and
(d) estimating a foreign currency offering price and standby order in reference to currency A or a foreign currency buying price and standby order in reference to currency B by the foreign exchange trading intermediary server 6, in consideration of the offering price and standby order of the block chain-based digital asset in reference to currency A and the buying price and standby order of the block chain-based digital asset in reference to currency B.

2. The trading method according to claim 1, wherein steps (a) and (b) are reversed or conducted at the same time; and steps (c) and (d) are reversed or conducted at the same time.

3. The trading method according to claim 1, wherein the foreign exchange trading intermediary server 6 converts and displays results calculated in reference to currency A or currency B in steps (c) and (d), respectively, according to selection from an exchange consumer terminal 2.

4. The trading method according to claim 1, wherein the foreign exchange trading intermediary server 6 processes and publishes the best foreign currency buy-offer bid, an average value thereof or reciprocals thereof as current prices, without considering the standby order.

5. The trading method according to claim 1, wherein the foreign exchange trading intermediary server 6 further displays publicly assessed price ("declared price") of the foreign exchange market.

6. The trading method according to claim 1, wherein the foreign exchange trading intermediary server 6 receives a request of a currency exchange consumer and automatically treats the transaction when a current exchangeable exchange rate becomes greater than (or exceeds) or less than (or under) the request of the foreign exchange consumer.

7. A currency exchange and foreign exchange trading method through a block chain-based digital asset including cryptocurrency as a medium, comprising:
when the block chain-based digital asset including one cryptocurrency is traded in two or more currencies in a single exchange, this digital asset is shared by a contract or the like between the exchanges dealing with different currencies from each other or trading information of the above digital asset is shared between the exchanges dealing with different currencies from each other,
(a) receiving a request of a currency exchange consumer to exchange a predetermined amount from currency A to currency B by a foreign exchange trading intermediary server 6;
(b) buying a digital asset in currency A of all or a portion of the predetermined amount from a single or multiple block chain-based digital asset sellers on standby;
(c) offering the bought block chain-based digital asset in currency B to a single or multiple block chain-based digital asset buyers on standby; and
(d) paying the offered currency B to the currency exchange consumer.

8. The trading method according to claim 7, wherein clearance is performed in step (b) by short sale after step (c) .

9. A currency exchange and foreign exchange trading method through a block chain-based digital asset including cryptocurrency as a medium, comprising:
when the block chain-based digital asset including one cryptocurrency is traded in two or more currencies in a single exchange, this digital asset is shared by a contract or the like between the exchanges dealing with different currencies from each other or trading information of the above digital asset is shared between the exchanges dealing with different currencies from each other,
(a) receiving a request of a currency exchange consumer to exchange a predetermined amount from currency A to currency B by a foreign exchange trading intermediary server 6;
(b) paying all or a portion of the predetermined amount in reference to currency A to a single or multiple block chain-based digital asset sellers on standby, and transferring all or a portion of the digital asset in reference to currency B to a single or multiple block chain-based digital asset buyers on standby; and
(c) paying all or a portion of standby fund of a single or multiple block chain-based digital asset buyers on standby in reference to currency B to the currency exchange consumer.
